Europäisches Patentamt

European Patent Office

Office européen des brevets

(11) Numéro de publication: **0 351 267**
**A1**

(12) # DEMANDE DE BREVET EUROPEEN

(21) Numéro de dépôt: **89401785.4**

(22) Date de dépôt: **23.06.89**

(51) Int. Cl.⁵: **G 01 S 13/80**

(30) Priorité: **12.07.88 FR 8809459**

(43) Date de publication de la demande:
**17.01.90 Bulletin 90/03**

(84) Etats contractants désignés: **ES GR**

(71) Demandeur: **THOMSON-CSF**
**51, Esplanade du Général de Gaulle**
**F-92800 Puteaux (FR)**

(72) Inventeur: **Maerfeld, Charles**
**THOMSON-CSF SCPI Cédex 67**
**F-92045 Paris la Défense (FR)**

(74) Mandataire: **Desperrier, Jean-Louis et al**
**THOMSON-CSF SCPI**
**F-92045 PARIS LA DEFENSE CEDEX 67 (FR)**

(54) Dispositif et procédé d'identification passif interrogeable à distance.

(57) L'invention concerne les dispositifs d'identification passifs interrogeables par des moyens radioélectriques.

Elle consiste, dans un tel dispositif comprenant une antenne (105) alimentant un dispositif à ondes acoustiques (101-104) et émettant le signal obtenu par ce dispositif à ondes acoustiques en réponse à l'excitation, à utiliser un dispositif à ondes de volume formé d'un cristal de corindon fonctionnant à des fréquences supérieures à 1 GHz.

Elle permet d'obtenir un dispositif d'identification fonctionnant à très haute fréquence en étant très petit et très robuste.

FIG.4

EP 0 351 267 A1

## Description

## DISPOSITIF ET PROCEDE D'IDENTIFICATION PASSIF INTERROGEABLE A DISTANCE

La présente invention se rapporte à un dispositif d'identification interrogeable à distance et fonctionnant de manière entièrement passive sans aucun apport d'énergie locale. Un tel dispositif peut être intégré dans un article que l'on désire protéger contre le vol, un livre dans une bibliothèque par exemple, et son interrogation à distance, à la sortie de la bibliothèque par exemple, permet de déclencher une alarme.

Il est connu du brevet US 3,273,146, inventeurs Henry HURWITZ et col., déposant General Electric Company, de réaliser un dispositif de repérage d'un véhicule tel qu'un train en utilisant une boucle accordée qui alimente un transducteur piézoélectrique, lequel excite une ligne à retard formée d'un long fil métallique semblable à celui utilisé dans certaines chambres d'écho des chaînes haute fidélité. Ce dispositif fonctionne à des fréquences de l'ordre de 450 kHz et est de ce fait très encombrant, ce qui oblige notamment à enrouler la ligne à retard sous forme de spirale pour occuper une place plus restreinte. Il y a toute la place voulue pour disposer un tel appareillage dans un train, mais il n'est pas possible de s'en servir pour protéger un objet aussi petit qu'un livre, ou même qu'une statue dans un musée.

Il est également connu du brevet US 4 059 831, inventeur Max EPSTEIN, déposant NORTHWESTERN UNIVERSITY, de réaliser un tel dispositif, parfois appelé étiquette passive, en utilisant un dispositif à ondes de surface relié à une antenne radioélectrique. Celle-ci sert à la fois à alimenter le dispositif à ondes de surface et à émettre un code déterminé par ce dernier.

Un tel dispositif à ondes de surface comporte sur un substrat piézoélectrique, par exemple en niobate de lithium, au moins deux transducteurs en forme de peignes interdigités qui sont gravés dans une couche conductrice. L'un au moins des peignes est formé d'un ensemble de transducteurs élémentaires pondérés chacun par un poids $A_i$ et apportant chacun un retard $t_i$. On obtient ainsi un codage de l'onde acoustique qui circule à la surface du substrat entre les deux transducteurs. Ce code est tel que, si $h(t)$ est la réponse impulsionnelle d'un transducteur élémentaire, la réponse impulsionnelle $s(t)$ du composant est de la forme :
$$s(t) = \Sigma_i A_i h (t-t_i)$$
Dans les réalisations les plus simples, les poids $A_i$ ont pour valeur + 1,0 ou -1 et la complexité du code est obtenue par un nombre important de retards élémentaires, par exemple 16 ou 32.

Les deux transducteurs d'entrée et de sortie sont reliés à des antennes électromagnétiques, ou éventuellement à une antenne commune.

Un émetteur récepteur d'ondes radioélectriques sert d'interrogateur de ce dispositif. Pour cela il émet une impulsion de faible durée par rapport à $h(t)$ et à $t_i$. Ce signal est reçu par l'antenne et vient donc exciter au moins l'un des transducteurs en donnant naissance à une onde de surface. Cette onde de surface est reçue par l'autre transducteur qui délivre un signal égal à $s(t)$ en raison du codage apporté par le transducteur codé. Ce signal $s(t)$ est réémis par l'antenne à laquelle est relié le transducteur de sortie, puis reçu par l'interrogateur. A l'intérieur de l'interrogateur des circuits électroniques d'analyse permettent de déterminer si le signal reçu est bien de la forme $s(t)$, et dans ce cas déclenchent une alarme.

L'interrogateur doit émettre avec une puissance suffisante afin d'obtenir un signal suffisamment fort en réponse à l'interrogation, ce qui entraîne la réception d'un grand nombre d'échos directs de l'onde électromagnétique. Toutefois, du fait de la très grande différence de vitesse entre les ondes électromagnétiques et les ondes acoustiques de surface, le retard apporté par le dispositif d'identification est beaucoup plus long que celui des échos directs et ceux-ci ne peuvent pas brouiller la réponse du dispositif.

Entre autres avantages ce procédé permet une interrogation à distance et il est entièrement passif.

Le signal $h(t)$ étant relativement court, son énergie est assez faible et l'énergie du signal reçu par l'interrogateur est encore plus faible. Pour améliorer le rapport signal/bruit on peut alors avoir recours à un traitement cohérent bien connu dans la technique du traitement du signal. Ce procédé consiste à émettre un signal relativement long modulé linéairement en fréquence, connu sous le nom anglo-saxon de "chirp". Le signal réémis par le dispositif correspond au produit de convolution de $s(t)$ avec le chirp. En procédant dans l'interrogateur à un traitement connu, comportant entre autres une nouvelle convolution avec le chirp et une transformée de Fourier inverse, on retrouve le signal $s(t)$ mais avec un gain en rapport signal/bruit égal à BT, où B est la bande passante du chirp et T sa durée. Pour B = 20 MHz et T = 10 ms par exemple, le gain est de 53 dB, ce qui est considérable.

L'utilisation d'un dispositif à ondes de surface pour réaliser un tel appareil comporte toutefois de sérieux inconvénients.

Tout d'abord la fréquence de fonctionnement d'un dispositif à ondes de surface peut difficilement être supérieure à 1 GHz, en raison des difficultés de gravure des transducteurs, qui augmentent avec la fréquence, laquelle réduit la largeur et l'espacement des doigts de ces transducteurs. L'antenne utilisée doit donc être assez longue.

Par ailleurs il convient de protéger la surface du dispositif pour éviter de perturber la propagation des ondes. Il faut donc utiliser un boîtier de protection relativement élaboré et donc coûteux.

Pour pallier ces inconvénients l'invention propose d'utiliser un dispositif d'identification passif interrogeable à distance, comprenant au moins une antenne destinée à recevoir un signal d'interrogation et à émettre un signal codé en retour, et un dispositif à onde acoustique de volume relié à cette antenne pour être excité par le signal d'interrogation et appliquer à l'antenne le signal de retour affecté d'au moins un retard par rapport au signal d'interrogation, dans lequel le dispositif à ondes acoustiques comprend un corps formé d'un cristal en forme de barreau pour fonctionner à des fréquences supérieures à 1 GhZ.

D'autres particularités et avantages de l'invention apparaîtront clairement dans la description suivante faite en regard des figures annexées qui représentent :

- la figure 1, un dispositif selon l'invention dans sa réalisation la plus simple ;
- la figure 2, un dispositif semblable à celui de la figure 1 supporté par un substrat comprenant une antenne ;
- la figure 3, un dispositif semblable à celui de la figure 1 dont l'antenne est en boucle et comportant un enrobage protecteur ;
- les figures 4 à 10, des variantes de réalisation de codage d'un dispositif selon l'invention ; et
- la figure 11, un dispositif selon l'invention composé d'un ensemble de dispositifs semblables à celui de la figure 3.

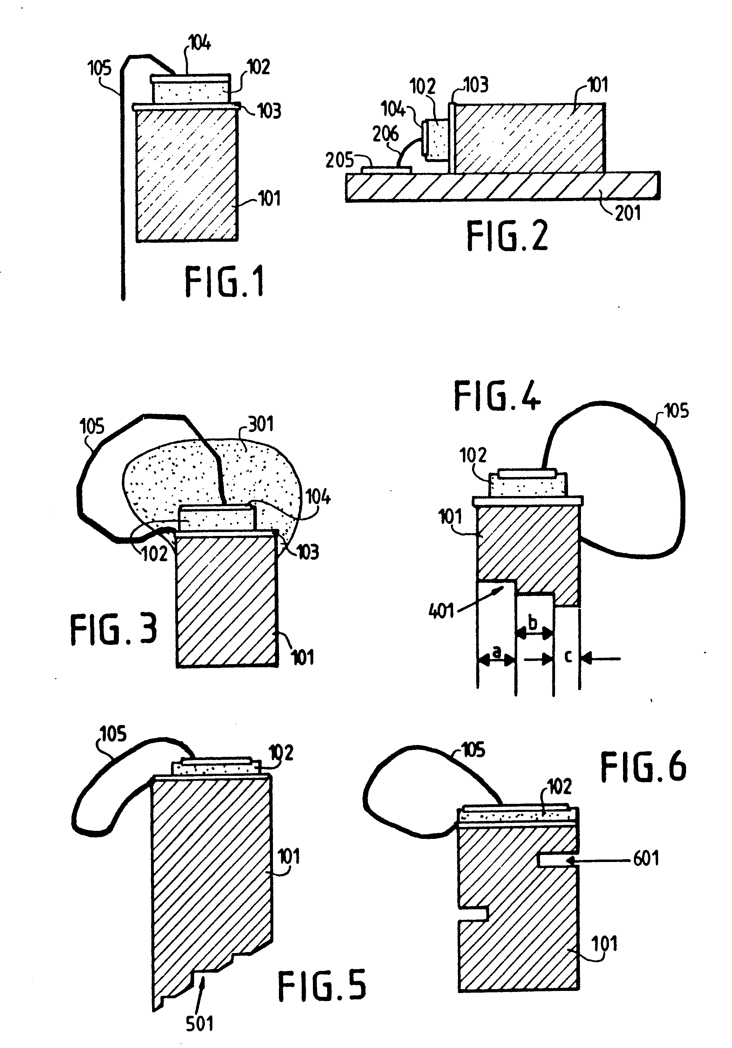

Le dispositif selon l'invention représenté en figure 1 comprend un corps 101 formant un milieu de propagation pour ondes de volume et ayant la forme d'un barreau. Ce corps est formé d'un cristal, par exemple en corindon, convenablement taillé. A une extrémité de ce barreau on a fixé un transducteur à ondes de volume 102 séparé du barreau 101 par une couche conductrice 103 formant électrode de masse. Ce transducteur peut être réalisé par évaporation d'une couche mince d'un produit piézoélectrique, par exemple de l'oxyde de zinc, ou par soudure d'un élément piézoélectrique, par exemple en niobate de lithium. Une deuxième couche conductrice 104 est déposée sur la face extérieure du transducteur et sert d'électrode chaude. Cette dernière est reliée à une antenne 105.

Le signal radioélectrique émis par l'interrogateur est reçu par cette antenne. Il excite le transducteur qui émet une onde de volume dans le corps 101. Cette onde de volume est réfléchie sur l'extrémité du corps opposée à celle où est fixé le transducteur. Elle revient vers ce dernier et l'atteint avec un retard déterminé par la vitesse des ondes de volume dans le corps et la longueur de celui-ci. Le retard ainsi apporté est bien supérieur à la durée de l'impulsion d'interrogation et le transducteur est alors libre pour être excité par l'onde de volume réfléchie. Le signal électrique délivré alors par le transducteur est appliqué à l'antenne 105 qui le rayonne dans l'espace où il est reçu par l'interrogateur.

Il est facile de faire fonctionner ce dispositif à des fréquences très élevées supérieures à 1 GHz, telles que par exemple 4,5 GHz. Ceci est rendu possible par le choix du milieu de propagation qui forme le corps et par le choix d'une technique permettant d'avoir un transducteur très mince. A une telle fréquence l'antenne 105 a une efficacité maximale pour une longueur égale à $\lambda/4$, soit 16 mm. On peut donc constituer cette antenne avec un simple morceau de fil comme sur la figure 1.

A titre de variante, on peut graver l'antenne sur un circuit imprimé, comme représenté sur la figure 2 où le corps 101 est fixé sur un substrat de circuit imprimé 201 sur lequel on a gravé une antenne 205 reliée à l'électrode 104 par un fil de connection 206. Afin de fixer l'antenne, on peut utiliser un enrobage formé d'un vernis ou d'une résine plastique ou encore, comme représenté sur la figure 3, former l'antenne d'un simple fil de connexion formant une boucle entre les électrodes 103 et 104. Une goutte de matière polymérisable 301 permet dans cet exemple de réalisation d'enrober le transducteur, les fixations de la boucle aux électrodes et l'extrémité du corps 101 de manière à protéger cet ensemble qui est la partie la plus fragile du dispositif.

Le retard apporté par le trajet aller et retour des ondes acoustiques pouvant être inférieur à la microseconde, l'encombrement du dispositif représenté sur la figure 3 peut être de l'ordre de quelques mm³.

Le dispositif ainsi décrit ne permet qu'un codage relativement simple correspondant à un simple retard, ou éventuellement à l'addition de plusieurs retards de même valeur puisque l'onde acoustique peut faire plusieurs allers et retours entre le transducteur et l'autre extrémité du corps. Un tel codage simple peut parfaitement être utilisable dans le cas où il n'y a pas de risque de confusion et où l'on ne souhaite pas faire de différence entre les réponses des différents objets surveillés.

L'invention permet toutefois d'utiliser toutes sortes de codages en usinant de manière appropriée le corps du dispositif à ondes de volume.

Ainsi dans l'exemple de réalisation représenté sur la figure 4 on a usiné la face arrière du corps 101, sur laquelle se réfléchissent les ondes acoustiques, pour former une série de paliers qui déterminent un ensemble d'échos présentant des retards distincts selon la distance à laquelle les paliers se trouvent du transducteur 102. L'amplitude de chacun des échos sur le palier correspondant est proportionnel à la surface de celui-ci, et donc à sa largeur dans le cas d'un palier rectangulaire comme sur la figure. Ceci permet de pondérer le code appliqué au signal réémis par des poids $A_i$ proportionnels aux largeurs a, b, c, etc. des paliers.

Une variante de réalisation du dispositif de la figure 4 consiste, comme sur la figure 5, à utiliser un corps 101 dont la face réfléchissante est inclinée. L'écho sur cette face ne parvient donc pas au transducteur 102. On obtient alors les échos désirés permettant d'exciter ce transducteur en réalisant sur cette face inclinée des encoches dont le fond est parallèle à la face supportant le transducteur. Ces encoches peuvent être réalisées avec des meules telles que celles qu'on utilise pour fabriquer les semi-conducteurs, ou par une simple photogravure chimique à travers un masque. L'inclinaison de la face arrière détermine l'intervalle dans lequel on peut faire varier les retards, et donc le codage.

Un autre mode de réalisation, représenté en figure 6, consiste à utiliser un corps 101 en forme de barreau comme dans la figure 1, mais à entailler les faces latérales de ce barreau par des encoches telles que 601, réalisées par exemple avec des meules diamantées très fines telles que celles utilisées pour réaliser les transducteurs ultrasonores des sondes d'échographies. La position de ces encoches par rapport au transducteur 102 détermine le retard de l'écho qui se produit sur elles, et leur largeur détermine l'intensité de ces échos.

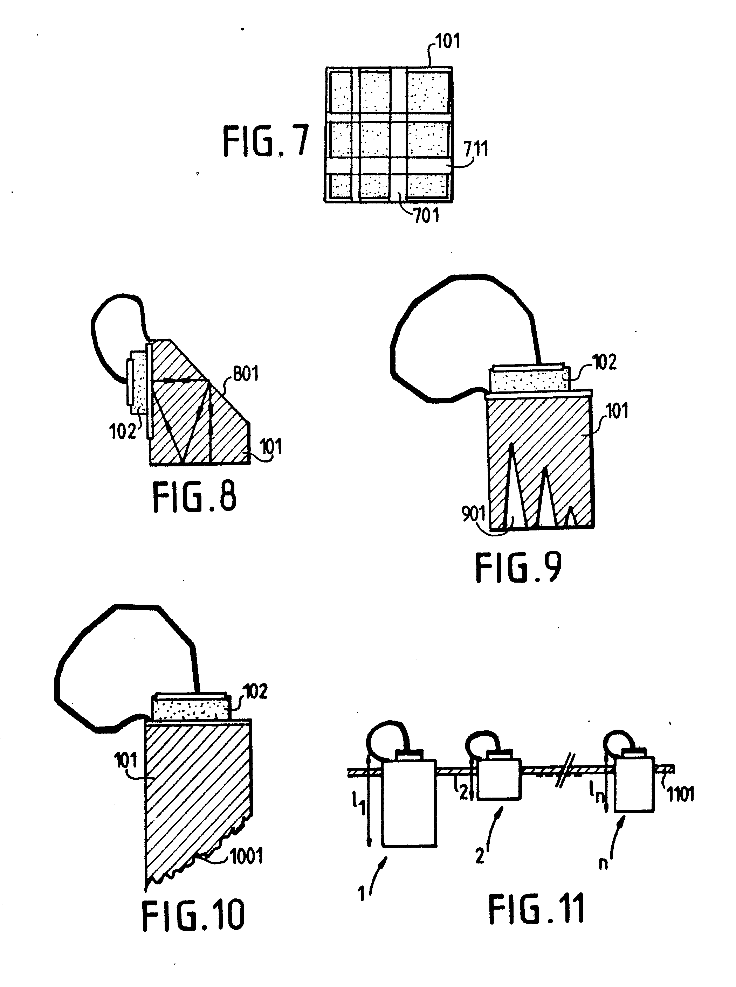

Dans la variante de réalisation de la figure 5 l'inclinaison de la face arrière du corps 101 n'était disposée que dans un seul sens, c'est-à-dire sur la figure entre les faces latérales gauche et droite de ce corps (par rapport au plan de la figure du corps), cette face arrière restant perpendiculaire aux deux autres faces latérales. Dans une extension de cette variante, représentée sur la figure 7, cette face arrière est inclinée dans les deux sens par rapport aux 4 faces latérales du corps 101. Ceci permet de graver des encoches 701 et 711 parallèlement à ces sens, ce qui augmente le nombre de moments du code disponible, puisque dans ces conditions seuls les intersections de ces encoches sont réfléchissantes vers le transducteur 102. Ainsi en prenant 5 encoches dans un sens et 5 encoches dans l'autre sens on obtient un code à 25 moments.

Dans un autre mode de réalisation, représenté en figure 8, on utilise un corps 101 de forme prismatique dans lequel l'onde acoustique incidente est réfléchie par une face 801 orientée à 45° par rapport à la direction de propagation incidente de cette onde. L'onde ainsi réfléchie va se réfléchir sur les autres parois du corps pour finalement revenir vers le transducteur 102. Les différents trajets ainsi obtenus, en combinaison avec les changements de polarisation lors des réflexions sur les parois, entraînent l'apparition d'un nombre relativement important d'échos. On peut généraliser ce mode de réalisation à des corps de formes plus complexes qui augmentent encore le nombre de réflexions.

En fait la réflexion provient essentiellement du changement d'impédance à l'interface entre le corps et le milieu extérieur. Il est connu de réaliser de telles ruptures d'impédance en réalisant des discontinuités en forme de pointe. Une autre forme de réalisation de l'invention, représentée sur la figure 9, consiste alors à forer des trous en forme de pointe dans la face arrière réfléchissante du corps 101. Ces trous 901 sont de profondeur variable pour obtenir des retards variables sur les échos. De tels trous s'obtiennent facilement à l'aide d'un simple foret et d'une perceuse.

En généralisant cette notion d'échos obtenus par des ruptures d'impédance, on obtient le mode de réalisation de la figure 10 où l'on a rendu rugueuse la face inférieure réfléchissante 1001 du corps 101, éventuellement après avoir usiné celle-ci sous une forme inclinée comme dans le mode de réalisation correspondant à la figure 5. Dans ces conditions le code obtenu est entièrement aléatoire, ce qui rend particulièrement difficile la reproduction du dispositif à des fins illicites, et même à des fins licites.

Dans ces conditions, quand le code n'est pas connu d'avance, on peut se demander de quelle manière un interrogateur détectera le signal en retour. Le problème est d'ailleurs semblable dans les autres modes de réalisation où les techniques de gravure garantissent certes des précisions très supérieures au retard relatif, mais procurent une incertitude assez grande sur la valeur absolue de ce retard. On constate d'ailleurs que ceci permet, lorsque l'on utilise ces techniques de gravure, à la fois une reconnaissance facile et un codage protecteur. Pour surmonter cette difficulté on utilise une méthode d'étalonnage dans laquelle on fait interroger chaque dispositif séparément par l'interrogateur et on analyse par des circuits appropriés la réponse individuelle du circuit interrogé. Cette réponse est alors mise en mémoire dans l'interrogateur et est utilisée ultérieurement pour la reconnaissance du dispositif en fonctionnement opérationnel.

Une autre variante, représentée sur la figure 11, permet enfin d'obtenir une précision importante aussi bien sur le retard relatif que sur le retard absolu, en utilisant N dispositifs identiques à la longueur près des corps. Ces longueurs $L_1$ à $L_n$ peuvent être ajustées avec précision et chaque dispositif répond séparément, la somme des signaux se faisant dans les circuits de réception de l'interrogateur puisque le retard dû à la séparation physique des dispositifs est insignifiant. Les N dispositifs sont alors supportés par exemple par un support commun 1101.

Il est connu que la bande passante d'un dispositif à ondes de volume peut facilement dépasser les 100 MHz. Pour une telle valeur on peut distinguer deux retards distants de 10 ns. En supposant que la vitesse de propagation des ondes acoustiques dans le substrat 101 soit de l'ordre de 5000 m/s, les discontinuités correspondant à ce retard minimal sont distantes de 25 µm. Cette précision ne peut pas raisonnablement être obtenue par des moyens mécaniques, ce qui entraîne une certaine imprécision sur le code obtenu. Compte tenu de la méthode exposée plus haut il y aura lieu alors d'utiliser un étalonnage au niveau de l'interrogateur, ce qui présente un surcoût de réalisation mais procure une sécurité plus importante contre les reproductions illicites. Les dispositifs ainsi réalisés sont particulièrement robustes et n'ont pas besoin d'une protection très importante. On peut obtenir celle-ci par un simple vernis sur les faces actives du transducteur.

Par ailleurs ces dispositifs sont d'une taille et d'un volume particulièrement faibles et ne nécessitent aucun circuit extérieur. Leur volume est inférieur à 10 mm³ et il est donc particulièrement facile de les dissimuler.

## Revendications

1. Dispositif d'identification passif interrogeable à distance, comprenant au moins une antenne destinée à recevoir un signal d'interrogation et à émettre un signal codé en retour, et un dispositif à onde acoustique de volume (101-104) relié à cette antenne pour être excité par le signal d'interrogation et appliquer à l'antenne le signal de retour affecté d'au moins un retard par rapport au signal d'interrogation, caractérisé en ce que le dispositif à ondes acoustiques (101-104) comprend un corps (101) formé d'un cristal en forme de barreau pour fonctionner à des fréquences supérieures à 1 GhZ.

2. Dispositif selon la revendication 1, caractérisé en ce que le cristal est en corindon.

3. Dispositif selon l'une quelconque des revendications 1 et 2, caractérisé en ce qu'il comprend un transducteur (102-104) électroacoustique placé à une extrémité du corps et comportant une couche mince (102) piézoélectrique.

4. Dispositif selon la revendication 3, caractérisé en ce que la couche mince (102) est en oxyde de zinc

5. Dispositif selon l'une quelconque des revendications 1 à 4, caractérisé en ce que le dispositif à ondes de volume comprend un corps (101) muni d'un transducteur unique d'entrée et de sortie (102-104) destiné à émettre les ondes acoustiques dans le sein du corps (101) et recevoir ces ondes acoustiques après réflexion sur au moins une discontinuité du corps, et une antenne (205) connectée à ce transducteur.

6. Disposition selon la revendication 5, caractérisé en ce que le corps (101) a une forme allongée et comprend une première extrémité sur laquelle est fixée le transducteur (102) et une deuxième extrémité sur laquelle se réfléchit l'onde acoustique renvoyée vers le transducteur.

7. Dispositif selon la revendication 6, caractérisé en ce que l'extrémité réfléchissante du corps (101) comprend un ensemble de paliers (401) qui permettent d'obtenir un ensemble d'échos échelonnés dans le temps.

8. Dispositif selon la revendication 7, caractérisé en ce que l'extrémité réfléchissante est inclinée par rapport au sens de propagation des ondes de volume et cette extrémité comporte un ensemble d'encoches (501) dont le fond forme les paliers permettant d'obtenir des échos distincts.

9. Dispositif selon la revendication 8, caractérisé en ce que l'extrémité inclinée du corps (101) est inclinée dans les deux sens par rapport aux faces latérales de ce corps et comporte deux ensembles d'encoches (701-711) dirigées dans ces deux sens et dont les surfaces de rencontre forment les paliers permettant d'obtenir les échos.

10. Dispositif selon la revendication 5, caractérisé en ce que le corps (101) est de forme allongée et comporte une extrémité sur laquelle est fixé le transducteur (102) et des faces latérales sur lesquelles sont réalisées des encoches (610) qui permettent d'obtenir des échos échelonnés.

11. Dispositif selon la revendication 5, caractérisé en ce que le corps (101) est de forme allongée et comporte une extrémité sur laquelle est fixé le transducteur (102) et une autre extrémité sur laquelle sont forés un ensemble de trous de forme conique (901) dont l'axe est parallèle à celui de l'axe de propagation des ondes de volume et dont les dimensions permettent d'obtenir des échos échelonnés.

12. Dispositif selon la revendication 5, caractérisé en ce que le corps est de forme allongée et comporte une première extrémité sur laquelle est fixé le transducteur (102) et une deuxième extrémité (1001) qui est usinée de façon à présenter une surface rugueuse qui permet d'obtenir un ensemble d'échos distincts répartis de manière aléatoire.

13. Dispositif selon la revendication 5, caractérisé en ce que le corps (101) est de forme prismatique et comporte au moins une face (801) inclinée par rapport à la direction de propagation des ondes de volume, ce qui permet d'obtenir des échos distincts par réflexions multiples sur les parois du corps.

14. Dispositif selon la revendication 5, caractérisé en ce qu'il comprend un ensemble de dispositifs à ondes de volume fixés sur un support unique (1101) pour répondre simultanément au même signal de l'interrogateur.

15. Procédé d'étalonnage d'un dispositif d'identification passif interrogeable à distance comprenant un dispositif à ondes de volume (101), caractérisé en ce que l'on interroge le dispositif isolément avec un interrogateur, on analyse la réponse de ce dispositif, et on mémorise cette réponse pour pouvoir identifier ultérieurement le dispositif lors d'une interrogation générale d'un ensemble de dispositifs.

FIG.1

FIG.2

FIG.3

FIG.4

FIG.5

FIG.6

FIG. 7

FIG.8

FIG.9

FIG.10

FIG.11

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-3 568 104 (F.M. BAILEY) <br> * En entier * <br> --- | 1-7,10 | G 01 S 13/80 |
| Y | FR-A-2 254 152 (L.T.T.) <br> * Page 2, lignes 19-34; page 4, lignes 31-32; figures 1,2 * <br> --- | 1-7,10 | |
| A,D | US-A-3 273 146 (H. HURWITZ, Jr.) <br> * Colonne 2, ligne 41 - colonne 4, ligne 29; figures 1-6 * <br> --- | 1,5,10 | |
| A | US-A-3 996 535 (Z. TURSKI) <br> * Colonne 2, lignes 25-40; figure * <br> --- | 8 | |
| A | PROCEEDINGS OF THE 6TH EUROPEAN MICROWAVE CONFERENCE, Rome, 14-17 septembre 1976, pages 254-260, Microwave Exhibitions and Publishers Ltd, Sevenoaks, Kent, GB; J. PUYHAUBERT et al.: "Multiple reflection and multi-echo electroacoustic bulkwave delay lines" <br> * Page 256, ligne 21 - page 257, ligne 4; figures 14-16 * <br> --- | 13 | |
| | | | DOMAINES TECHNIQUES RECHERCHES (Int. Cl.5) |
| A | EP-A-0 005 534 (SIEMENS) <br> * Page 2, lignes 7-18; page 3, ligne 7 - page 4, ligne 30; figure 1 * <br> --- | 1,5,14 | G 01 S <br> H 03 H |
| A | US-A-4 688 026 (J.R. SCRIBNER et al.) <br> * Résumé * <br> ----- | 15 | |

Le présent rapport a été établi pour toutes les revendications

| Lieu de la recherche | Date d'achèvement de la recherche | Examinateur |
|---|---|---|
| LA HAYE | 25-09-1989 | VAN WEEL E.J.G. |